# EUROPÄISCHE PATENTSCHRIFT

(11) **EP 2 340 413 B1**
(45) Veröffentlichungstag und Bekanntmachung des Hinweises auf die Patenterteilung: **07.01.2015**
(21) Anmeldenummer: 09771504.9
(22) Anmeldetag: 27.11.2009
(51) Int. Cl.: G01D 5/14, G01B 7/30

(54) **MESSVORRICHTUNG ZUR ERFASSUNG EINER RELATIVBEWEGUNG**
MEASURING APPARATUS FOR THE DETECTION OF A RELATIVE MOVEMENT
DISPOSITIF DE MESURE PERMETTANT DE MESURER UN MOUVEMENT RELATIF

(30) Priorität: 27.11.2008 DE 102008059402
(43) Veröffentlichungstag der Anmeldung: 06.07.2011
(73) Patentinhaber: Micronas GmbH, 79108 Freiburg (DE)
(72) Erfinder: FRANKE, Jörg, 79117 Freiburg (DE); HEBERLE, Klaus, 79312 Emmendingen (DE)
(74) Vertreter: Koch Müller Patentanwaltsgesellschaft mbH
(86) Internationale Anmeldenummer: PCT/EP2009/008453
(87) Internationale Veröffentlichungsnummer: WO 2010/060629

(56) Entgegenhaltungen:
- EP-A1- 0 726 448
- US-A1- 2007 229 060

## Beschreibung

Die Erfindung betrifft eine Messvorrichtung zur Erfassung einer Relativbewegung zwischen mindestens einer in einen Halbleiterchip integrierten Magnetfeld-Sensoranordnung und einem Geber für diese Sensoranordnung,
- wobei der Geber und die Sensoranordnung vom magnetischen Fluss eines Magneten durchsetzt sind und der Geber Zähne aufweist, die bei der Relativbewegung an der Sensoranordnung vorbei bewegbar sind,
   oder
- wobei der Geber Magnetpole aufweist, die bei der Relativbewegung an der Sensoranordnung vorbei bewegbar sind,
   wobei die Sensoranordnung einen Differential-Magnetfeldsensor aufweist, der eine erste Messplatte und eine zweite Messplatte hat, die in Bewegungsrichtung der Relativbewegung zueinander versetzt sind.

Eine derartige Messvorrichtung, die einen kreisscheibenförmigen Geber mit Magnetpolen aufweist, die sich bei einer Rotationsbewegung des Gebers um eine rechtwinklig zur Ebene der Kreisscheibe angeordneten Achse an dem Magnetfeldsensor vorbei bewegen, ist aus EP 1 182 461 A2 bekannt. Der Magnetfeldsensor hat drei in einen Halbleiterchip integrierte Differential-Magnetfeldsensoren, die jeweils zwei horizontale Messplatten aufweisen, die mit Abstand von 120° auf einer zur Rotationsachse des Gebers konzentrischen Kreisbahn angeordnet sind. Auf dem Halbleiterchip ist eine kreisscheibenförmige Schicht aus einem magnetisch leitfähigen Material angeordnet, die als Magnetfeldkonzentrator dient und die Messplatten überdeckt. Bei einer Messvorrichtung, bei welcher der Abstand der beiden Messplatten des Differential-Magnetfeldsensors in Richtung der Relativbewegung klein im Verhältnis zum Abstand der Magnetpole ist, ergibt sich nur ein entsprechend kleines differentielles Messsignal. Bei großen Relativgeschwindigkeiten zwischen Geber und Halbleiterchip kann das differentielle Messsignal relativ gut ausgewertet werden, um z.B. die Relativposition zwischen Geber und Halbleiterchip zu ermitteln. Bei kleinen Relativgeschwindigkeiten und insbesondere wenn der Differential-Magnetfeldsensor mittig zwischen zwei Magnetpolen des Gebers angeordnet ist, ist die Auswertung des differentiellen Messsignals jedoch schwierig.

Aus EP 1 182 461 A2 ist ferner eine Messvorrichtung bekannt, die zwei in einen Halbleiterchip integrierte Differential-Magnetfeldsensoren aufweist, die jeweils zwei horizontale Messplatten umfassen, die mit Abstand von 180° auf einer zur Rotationsachse des Gebers konzentrischen Kreisbahn angeordnet sind. Zusätzlich dazu ist in dem Halbleiterchip ein Magnetfeld-Sensorelement mit einer weiteren horizontalen Messplatte vorgesehen, die mittig zu der Kreisbahn angeordnet ist. Mit Hilfe dieses Sensorelements kann zwar der Absolutwert des Magnetfelds im Zentrum des Kreises gemessen werden. Das Sensorelement ist jedoch zur Erfassung der Relativposition der Zähne oder Magnetpole eines konzentrisch zu der Kreisbahn angeordneten Gebers nicht geeignet. Somit stehen auch hier für die Bestimmung der Drehlage der Zähne oder Magnetpole des Gebers nur differentielle Messsignale zur Verfügung.

In DE 10 2004 017 191 Al ist eine Messvorrichtung offenbart, die einen in einen Halbleiterchip integrierten ersten Differential-Magnetfeldsensor hat, der zwei Magnetfeldsensoren des gleichen Typs aufweist welche jeweils eine horizontale Magnetfeldkomponente erfassen. Der Abstand der ersten Magnetfeldsensoren entspricht der Pitchlänge des Polrads. Zusätzlich dazu weist der Halbleiterchip einen zweiten Differential-Magnetfeldsensor auf, der zwei Magnetfelderfassungseinrichtungen hat deren Abstand ebenfalls der Pitchlänge entspricht und die jeweils über oder unter einem ihnen zugeordneten Magnetfeldsensor angeordnet sind. Das differentielle Messsignal des ersten Differential-Magnetfeldsensors wird als Drehzahlsignal genutzt. Aus den differentiellen Messsignalen beider Differential-Magnetfeldsensoren wird ein Richtungssignal erzeugt. Die Messvorrichtung weist jedoch einen relativ komplizierten Aufbau auf.

Weitere Vorrichtungen sind aus der US 2007 / 229 060 A1 und der EP 0 726 488 A1. bekannt.

Es besteht deshalb die Aufgabe, eine Messvorrichtung der eingangs genanten Art zu schaffen, die bei einem einfachen Aufbau eine hohe Messgenauigkeit ermöglicht.
Diese Aufgabe wird dadurch gelöst, dass der Magnetfeldsensor ein zur Messung des absoluten Magnetfelds ausgestaltetes Sensorelement mit einer dritten Messplatte aufweist, die in Bewegungsrichtung der Relativbewegung zwischen der ersten Messplatte und der zweiten Messplatte angeordnet ist.

In vorteilhafter Weise stellt also die Messvorrichtung zusätzlich zu einem differentiellen Messsignal ein absolutes Messsignal zur Verfügung, wobei sich beide Messsignale auf denselben Ort des Magnetfelds beziehen. Die dritte Messplatte ist bei einem symmetrisch zu den Zähnen bzw. den Magnetpolen des Gebers verlaufenden Magnetfeld vorzugsweise mittig zwischen der ersten und der zweiten erste Messplatte angeordnet ist, insbesondere auf einer die erste und die zweite Messplatte miteinander verbindenden, entlang der Bahnkurve der Relativbewegung verlaufenden Linie. Die Messplatten sind vorzugsweise als Hallplatten ausgestaltet, die mit einer geeigneten Ansteuer- und Auswerteeinrichtung verbunden sind.

Bei einer zweckmäßigen Ausführungsform der Erfindung sind die Messplatten derart angeordnet, dass sie für eine in Bewegungsrichtung der Relativbewegung verlaufende Komponente des magnetischen Flusses empfindlich sind. Dabei sind die Messplatten bevorzugt vertikal, d.h. quer und insbesondere rechtwinklig zur Ebene des Halbleiterchips angeordnet. Es ist aber auch möglich, horizontale Messplatten vorzusehen und die in Bewegungsrichtung der Relativbewegung verlaufende Komponente des magnetischen Flusses mit Hilfe eines aus einem magnetisch gut leitenden Werkstoff bestehenden Flussleitkörpers in eine normal zur Ebene des Halbleiterchips verlaufende Richtung umzulenken.

Bei einer anderen vorteilhaften Ausgestaltung der Erfindung sind die Messplatten derart angeordnet, dass sie für eine quer und insbesondere normal zur Bewegungsrichtung der Relativbewegung verlaufende Komponente des magnetischen Flusses empfindlich sind. Die Messplatten erstrecken sich in diesem Fall bevorzugt in der Ebene des Halbleiterchips.

Bei einer Weiterbildung der Erfindung hat der Magnetfeldsensor mindestens zwei der Sensoranordnungen, jeweils zumindest bestehend aus dem DifferentialMagnetfeldsensor und dem Sensorelement, wobei die Messrichtungen dieser Sensoranordnungen quer und insbesondere rechtwinklig zueinander ausgerichtet sind. Diese Ausgestaltung wird als besonders vorteilhaft erachtet, weil sie eine gleichzeitige absolute und differentielle Erfassung von zwei quer zueinander verlaufenden Komponenten des Magnetfelds am selben Ort ermöglicht, insbesondere der horizontalen und vertikalen Komponente.

Ferner besteht die Möglichkeit, die Messsignale von Messplatten, bei denen die Flächenschwerpunkte der von den Messplatten aufgespannten Flächen in derselben, rechtwinklig zur Bewegungsrichtung der Relativbewegung verlaufenden Ebene angeordnet sind, miteinander zu vergleichen und Impulse in Abhängigkeit vom Ergebnis dieses Vergleichs zu erzeugen. Dabei können die Impulse insbesondere bei Übereinstimmung der Messsignale und/oder der Beträge der Messsignale generiert werden. Eine Signalwandlerstufe kann hierzu mit den Messsignalausgängen mindestens zweier Messplatten verbunden sein, die in quer und vorzugsweise rechtwinklig zueinander verlaufenden Ebenen angeordnet sind.

Ein Messsignalausgang mindestens einer Messplatte kann mit einer Signalwandlerstufe verbunden sein, die einen Ausgang aufweist, an dem der Relativbewegung synchron zugeordnete Impulse ausgebbar sind. Die Impulse können an den Extremwerten der Messsignale und/oder in Abhängigkeit vom Ergebnis des Vergleichs eines Messsignals mit einem Referenzwert ausgegeben werden.

Zur Reduzierung eines Offsets bzw. einer Vorspannung in einer gemessenen HallSpannung ist es vorteilhaft, wenn mindestens eine Messplatte zwei Kontaktpaare mit jeweils voneinander beabstandeten Anschlusskontakten zum Anlegen von Hall-Sensor-Strömen und/oder zum Abgreifen von Hall-Spannungen aufweist, wenn die Messvorrichtung eine Stromquelle zum Erzeugen der Hall-Sensor-Ströme und Ausgangsanschlüsse zur Ausgabe der Hall-Spannung hat, wenn die Anschlusskontakte über eine Schalteinrichtung mit der Stromquelle und den Ausgangsanschlüssen verbindbar sind, und wenn die Schalteinrichtung derart mit einer Ansteuereinrichtung in Steuerverbindung steht, dass folgende Schritte nacheinander durchlaufen werden können:
a) Verbinden der Stromquelle mit dem ersten Kontaktpaar und Verbinden der Ausgangsanschlüsse mit einem zweiten Kontaktpaar,
b) Verbinden der Stromquelle mit dem zweiten Kontaktpaar und Verbinden der Ausgangsanschlüsse mit dem ersten Kontaktpaar.

Dadurch ist es möglich, die Messplatte nacheinander in unterschiedliche Richtungen zu bestromen und für jede Bestromungsrichtung jeweils eine Hallspannung zu messen. Aus den so erhaltenen Hall-Spannungen kann dann der Mittelwert gebildet werden, um einen eventuellen Offset in den Hall-Spannungen zu kompensieren.

Nachfolgend sind Ausführungsbeispiele der Erfindung anhand der Zeichnung näher erläutert. Es zeigt
- Fig. 1A: eine Teilaufsicht auf eine Messvorrichtung zur Erfassung einer Relafivbewegung zwischen einem Zähne aufweisenden Geberrad und mindestens einem in einen Halbleiterchip integrierten Magnetfeldsensor,
- Fig. 1B: eine Teilaufsicht auf eine Messvorrichtung zur Erfassung einer Relativbewegung zwischen einem Magnetpole aufweisenden Geber und mindestens einem in einen Halbleiterchip integrierten Magnetfeldsensor, und
- Fig. 2A bis 2H: Querschnitte durch unterschiedliche Ausführungsbeispiele des Halbleiterchips, wobei die Querschnittsebene der Zeichenebene in Fig. 1A bzw. in Fig. 1B entspricht.

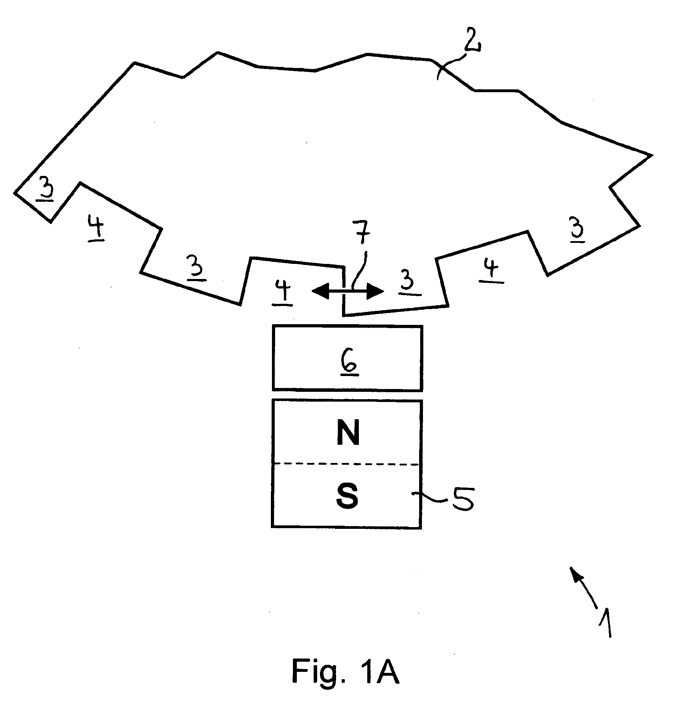

Eine in Fig. 1A im Ganzen mit 1 bezeichnete Messvorrichtung zur Erfassung einer Relativbewegung weist einen als Zahnrad ausgestalteten weichmagnetischen Geber 2 auf, der an einer in der Zeichnung nicht näher dargestellten Halterung um ein Rotationsachse drehbar gelagert ist. Der Geber 2 hat an seinem Außenumfang mehrere in Umfangsrichtung voneinander beabstandete Zähne 3, zwischen denen Zahnlücken 4 gebildet sind.

Am Außenumfang des Gebers 2 ist ferner ein Permanent-Magnet 5 angeordnet, der durch einen Luftspalt in radialer Richtung vom Geber 2 beabstandet ist. Der Magnet 5 ist etwa radial zur Rotationsachse des Gebers 2 magnetisiert.

Im Luftspalt ist ein Halbleiterchip 6 angeordnet, der mit seiner Chipebene parallel zur Rotationsachse des Gebers 2 und parallel zur Bewegungsrichtung 7 der an dem Halbleiterchip 6 vorbeilbewegbaren Zähne 3 und Zahnlücken 4 orientiert ist. In den Halbleiterchip ist ein Magnetfeldsensor integriert. Der Geber 2 und der Magnetfeldsensor werden von dem vom Magnet 5 erzeugten magnetischen Fluss durchströmt.

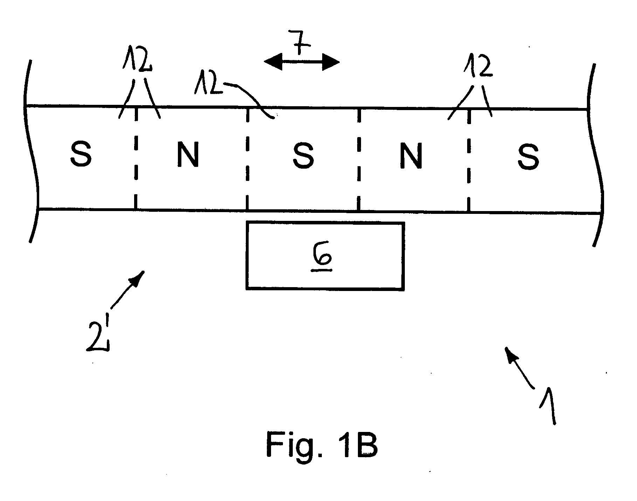

Bei dem in Fig. 1B dargestellten Ausführungsbeispiel weist die Messvorrichtung 1 einen in Bewegungsrichtung 7 der Relativbewegung verschiebbaren, stabförmigen Geber 2' auf Der Geber 2' hat eine sich in Bewegungsrichtung 7 erstreckende Reihe von abwechselnd in zueinander entgegen gesetzte Richtungen magnetisierten Magnetpolen 12. In dem vom Geber 2' erzeugten magnetischen Fluss ist ein einen Magnetfeldsensor aufweisender Halbleiterchip 6 angeordnet, der mit einer Flachseite den Magnetpolen 12 zugewandt ist und mit seiner Chipebene parallel zur Bewegungsrichtung 7 verläuft.

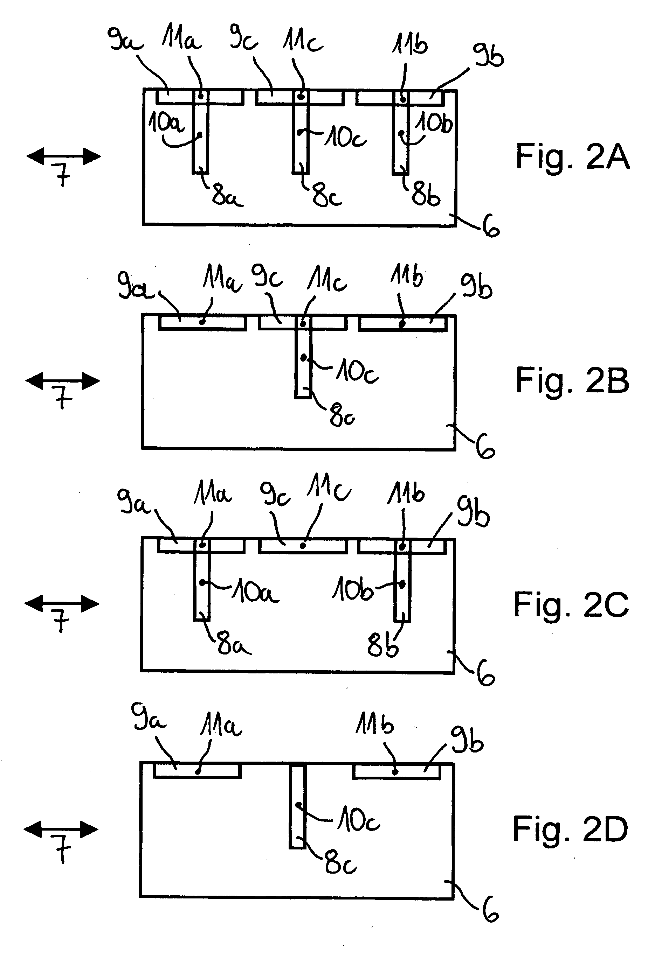

Bei dem in Fig. 2A gezeigten Ausführungsbeispiel weist der Magnetfeldsensor zur differentiellen Messung des Magnetfelds zwei Differential-Magnetfeldsensoren und zusätzlich dazu zwei Magnetfeld-Sensorelemente zur absoluten Messung des Magnetfelds auf

Ein erster Differential-Magnetfeldsensor hat eine erste vertikale Messplatte 8a und eine zweite vertikale Messplatte 8b, die in Bewegungsrichtung 7 der Relativbewegung zueinander beabstandet sind und sich jeweils in einer etwa radial zur Rotationsachse des Gebers 2, 2' verlaufenden Ebene erstrecken. Das Messsignal des ersten Differential-Magnetfeldsensors entspricht der Ableitung der in Bewegungsrichtung 7 der Relativbewegung verlaufenden Komponente des Magnetfelds an einer Stelle, die auf einer durch die Flächenschwerpunkte 10a, 10b der ersten vertikalen Messplatte 8b und der zweiten vertikalen Messplatte 8b konzentrisch zur Rotationsachse des Gebers 2 verlaufenden ersten Kreislinie angeordnet ist.

Ein erstes Magnetfeld-Sensorelement hat eine dritte vertikale Messplatte 8c, die sich in einer radial zur Rotationsachse des Gebers 2 verlaufenden weiteren Ebene erstreckt, die mittig zwischen den Ebenen der ersten Messplatte 8a und der zweiten Messplatte 8b verläuft. Die Flächenschwerpunkte 10a, 10b 10c aller drei Messplatten 8a, 8b, 8c liegen auf der ersten Kreislinie. Das Messsignal des ersten Sensorelements entspricht dem Absolutwert der in Bewegungsrichtung 7 der Relativbewegung verlaufenden Komponente des Magnetfelds an der Stelle der ersten Kreislinie, die mittig zwischen der ersten vertikalen Messplatte 8b und der zweiten vertikalen Messplatte 8b angeordnet ist. Die Messsignale des ersten DifferentialMagnetfeldsensors und des ersten Sensorelements beziehen sich also auf denselben Messort.

Ein zweiter Differential-Magnetfeldsensor hat eine erste horizontale Messplatte 9a und eine zweite horizontale Messplatte 9b, die in Bewegungsrichtung 7 der Relativbewegung zueinander versetzt sind und sich in derselben, normal zur Rotationsachse des Gebers 2 verlaufenden Ebene erstrecken. Das Messsignal des zweiten Differential-Magnetfeldsensors entspricht der Ableitung einer parallel zur Rotationsachse des Gebers 2 verlaufenden Komponente des Magnetfelds an einer Stelle, die auf einer konzentrisch zur Rotationsachse des Gebers 2 angeordneten, durch die Flächenschwerpunkte 11 a, 11 b der ersten horizontalen Messplatte 9a und der zweiten horizontalen Messplatte 9b verlaufenden zweiten Kreislinie mittig zwischen diesen Messplatten 9a, 9b angeordnet ist.

Ein zweites Magnetfeld-Sensorelement hat eine dritte horizontale Messplatte 9c, die sich in derselben Ebene erstreckt, wie die erste horizontale Messplatte 9a und die zweite horizontale Messplatte 9b. Die Flächenschwerpunkte 11a, 11 b, 11 c aller drei horizontalen Messplatten 9a, 9b, 9c liegen auf der zweiten Kreislinie. Das Messsignal des zweiten Sensorelements entspricht dem Absolutwert der parallel zur Rotationsachse des Gebers 2, 2' verlaufenden Komponente des Magnetfelds an einer Stelle, die auf der zweiten Kreislinie mittig zwischen der ersten horizontalen Messplatte 9a und der zweiten horizontalen Messplatte 9b angeordnet ist. Die Messsignale des zweiten Differential-Magnetfeldsensors und des zweiten Sensorelements beziehen sich also auf denselben Messort. Dieser befindet sich direkt über dem Messort des ersten Differential-Magnetfeldsensors und des ersten Sensorelements. Mit Hilfe des in Fig. 2A gezeigten Magnetfeldsensors können also praktisch an derselben Stelle die tangentiale und die radiale Komponente des den Halbleiterchip 6 durchsetzenden magnetischen Flusses gemessen werden.

In Fig. 2A ist ferner erkennbar, dass die horizontalen Messplatten 9a, 9b, 9c jeweils eine der vertikalen Messplatten 8a, 8b, 8c durchdringen.

Bei dem Ausführungsbeispiel gemäß Fig. 2B sind vier Messplatten in den Halbleiterchip 6 integriert. Drei horizontale Messplatten 9a, 9b, 9c sind in der Chipebene in konstanten Abständen zueinander in einer in Bewegungsrichtung 7 verlaufenden Reihe angeordnet. Die beiden äußeren horizontalen Messplatten 9a, 9b bilden einen Differential-Magnetfeldsensor. Mittig zwischen diesen Messplatten 9a, 9b sind eine weitere horizontale Messplatte 9c und eine vertikale Messplatte 8c angeordnet. Die vertikale Messplatte verläuft etwa rechtwinklig zur Bewegungsrichtung 7.

Das in Fig. 2C gezeigte Ausführungsbeispiel weist zwei Differential-Magnetfeldsensoren auf, die denen des in Fig. 2A gezeigten Ausführungsbeispiels entsprechen. Zusätzlich dazu ist ein Magnetfeld-Sensorelement vorgesehen, das eine dritte horizontale Messplatten 9c aufweist, die sich in derselben Ebene erstreckt, wie die erste horizontale Messplatte 9a und die zweite horizontale Messplatte 9b. Die Flächenschwerpunkte 11 a, 11 b, 11 c aller drei horizontalen Messplatten 9a, 9b, 9c liegen auf einer zweiten Kreislinie, die auf einer konzentrisch zur Rotationsachse des Gebers 2 angeordneten, durch die Flächenschwerpunkte 11 a, 11 b, 11 c der horizontalen Messplatten 9a, 9b, 9c verlaufenden zweiten Kreislinie mittig zwischen diesen Messplatten 9a, 9b angeordnet ist. Das Messsignal des zweiten Sensorelements entspricht dem Absolutwert der parallel zur Rotationsachse des Gebers 2, 2' verlaufenden Komponente des Magnetfelds an einer Stelle, die auf der zweiten Kreislinie mittig zwischen der ersten horizontalen Messplatte 9a und der zweiten horizontalen Messplatte 9b angeordnet ist. Die Messsignale des zweiten Differential-Magnetfeldsensors und des zweiten Sensorelements beziehen sich also auf denselben Messort.

Bei dem in Fig. 2D gezeigten Ausführungsbeispiel ist mittig zwischen zwei in der Chipebene nebeneinander angeordneten horizontalen Messplatten 9a, 9b eine vertikale Messplatte 8c vorgesehen. Die beiden zuerst genannten Messplatten 9a, 9b sind Teil eines Differential-Magnetfeldsensors. Die vertikalen Messplatte 8b ist etwa rechtwinklig zur Chipebene und zur Bewegungsrichtung 7 ausgerichtet und mittig zwischen den horizontalen Messplatten 9a, 9b angeordnet.

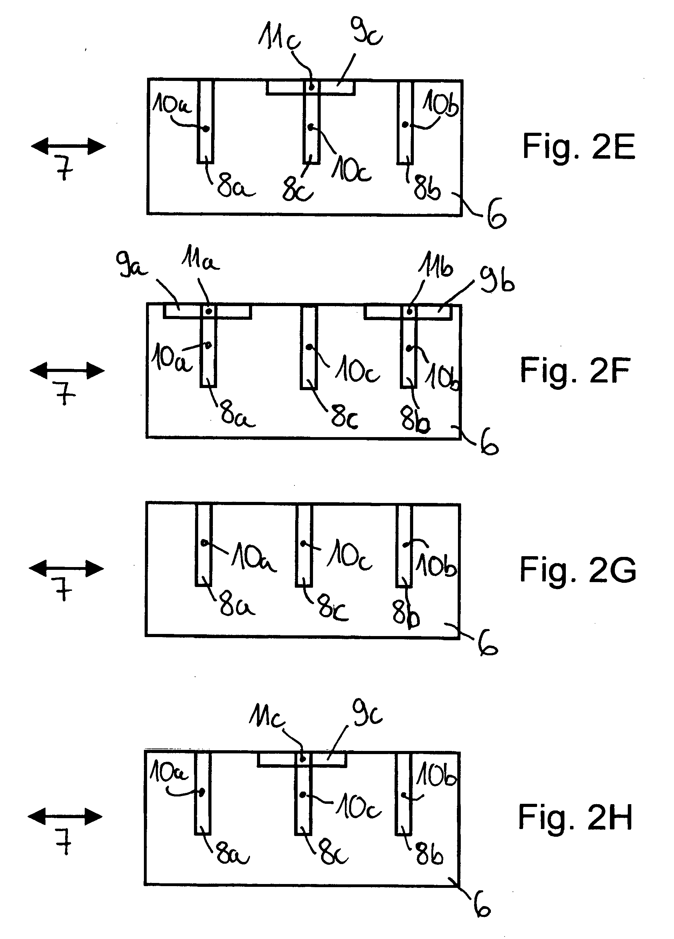

Bei dem in Fig. 2E gezeigten Ausführungsbeispiel weist die Messvorrichtung einen Differential-Magnetfeldsensor auf, der mit dem ersten Differential-Magnetfeldsensor des in Fig. 2A gezeigten Ausführungsbeispiels übereinstimmt. Zusätzlich dazu ist ein erstes Magnetfeld-Sensorelement vorgesehen, das eine dritte vertikale Messplatte 8c aufweist, die mittig zwischen der ersten vertikalen Messplatte 8a und der zweiten vertikalen Messplatte 8b in einer radial zur Rotationsachse des Gebers 2, 2' verlaufenden Ebene angeordnet ist. Die Flächenschwerpunkte 10a, 10b 10c aller drei vertikalen Messplatten 8a, 8b, 8c liegen auf einer auf einer konzentrisch zur Rotationsachse des Gebers 2, 2' angeordneten Kreislinie. Mittig zu dem ersten Sensorelement ist ein zweites Magnetfeld-Sensorelement angeordnet, das eine horizontale Messplatte 9c aufweist, welche die dritte vertikale Messplatte 8c durchsetzt.

Bei dem in Fig. 2F gezeigten Ausführungsbeispiel hat die Messvorrichtung einen ersten und einen zweiten Differential-Magnetfeldsensor. Der erste DifferentialMagnetfeldsensor stimmt mit dem ersten Differential-Magnetfeldsensor der Fig. 2A und der zweite Differential-Magnetfeldsensor mit dem zweiten Differential-Magnetfeldsensor dieser Figur überein. Außerdem hat die in Fig. 2F gezeigte Messvorrichtung 1 ein Magnetfeld-Sensorelement, das eine vertikale Messplatte 8c hat, die mittig zwischen der ersten vertikalen Messplatte 8a und der zweiten vertikalen Messplatte 8b angeordnet ist und sich in einer radial zur Rotationsachse verlaufenden Ebene erstreckt. Die Flächenschwerpunkte 10a, 10b, 10c aller drei vertikalen Messplatten 8a, 8b, 8c liegen auf einer auf einer konzentrisch zur Rotationsachse des Gebers 2 angeordneten Kreislinie.

Der in Fig. 2G gezeigte Magnetfeldsensor hat einen Differential-Magnetfeldsensor und zusätzlich dazu ein Sensorelement zur absoluten Messung des Magnetfelds. Der Differential-Magnetfeldsensor hat eine erste vertikale Messplatte 8a und eine zweite vertikale Messplatte 8b, die in Bewegungsrichtung 7 der Relativbewegung zueinander beabstandet sind und sich jeweils in einer radial zur Rotationsachse des Gebers 2, 2' verlaufenden Ebene erstrecken. Das Messsignal des ersten Differential-Magnetfeldsensors entspricht der Ableitung der in Bewegungsrichtung 7 der Relativbewegung verlaufenden Komponente des Magnetfelds an einer Stelle, die auf einer durch die Flächenschwerpunkte 10a, 10b der ersten vertikalen Messplatte 8b und der zweiten vertikalen Messplatte 8b konzentrisch zur Rotationsachse des Gebers 2 verlaufenden ersten Kreislinie angeordnet ist.

Das Sensorelement hat eine dritte vertikale Messplatte 8c, die sich in einer radial zur Rotationsachse des Gebers 2 verlaufenden weiteren Ebene erstreckt, die mittig zwischen den Ebenen der ersten vertikalen Messplatte 8a und der zweiten vertikalen Messplatte 8b verläuft. Die Flächenschwerpunkte 10a, 10b 10c aller drei Messplatten 8a, 8b, 8c liegen auf einer zu Rotationsachse des Gebers 2, 2' konzentrischen Kreislinie. Das Messsignal des Sensorelements entspricht dem Absolutwert der in Bewegungsrichtung 7 der Relativbewegung verlaufenden Komponente des Magnetfelds an der Stelle der ersten Kreislinie, die mittig zwischen der ersten vertikalen Messplatte 8b und der zweiten vertikalen Messplatte 8b angeordnet ist. Die Messsignale des ersten Differential-Magnetfeldsensors und des ersten Sensorelements beziehen sich also auch hier auf denselben Messort.

Der in Fig. 2H gezeigte Magnetfeldsensor entspricht im Aufbau dem Magnetfeldsensor aus Fig. 2G, weist jedoch zusätzlich eine dritte vertikale Messplatte 8c auf, die mittig zwischen der ersten vertikalen Messplatte 8a und der zweiten vertikalen Messplatte 8b angeordnet ist. Der Flächenschwerpunkt 11 c der dritten horizontalen Messplatte 9c ist über dem Flächenschwerpunkt 10c der dritten vertikalen Messplatte 9c angeordnet.

Erwähnt werden soll noch, dass in den Halbleiterchip 6 auch mindestens zwei der in Fig. 2A-2H gezeigten Sensor-Konfigurationen nebeneinander integriert sein können. Eine derartige Messvorrichtung kann beispielsweise für eine lineare Wegmessung verwendet werden. Bei einer linearen Wegmessung sind die Ebenen der vertikalen Messplatten 8a, 8b, 8c parallel zueinander angeordnet.

Die in der Zeichnung gezeigten Messplatten 8a, 8b, 8c, 9a, 9b, 9c sind vorzugsweise als Hallplatten ausgestaltet. Es können aber auch magnetoresistive Platten zum Einsatz kommen.

## Patentansprüche

1. Messvorrichtung (1) zur Erfassung einer Relativbewegung zwischen mindestens einer in einen Halbleiterchip (6) integrierten Magnetfeld Sensoranordnung und einem Geber (2, 2') für diese Sensoranordnung,
wobei der Geber (2) und die Sensoranordnung vom magnetischen Fluss eines Magneten (5) durchsetzt sind und der Geber (2) Zähne (3) aufweist, die bei der Relativbewegung an der Sensoranordnung vorbei bewegbar sind, oder
wobei der Geber (2') Magnetpole (12) aufweist, die bei der Relativbewegung an der Sensoranordnung vorbei bewegbar sind, wobei die Sensoranordnung einen Differential-Magnetfeldsensor aufweist, der eine erste Messplatte (8a, 9a) und eine zweite Messplatte (8b, 9b) hat, die in Bewegungsrichtung (7) der Relativbewegung zueinander versetzt sind, und
die Sensoranordnung ein zur Messung des absoluten Magnetfelds ausgestaltetes Sensorelement mit einer dritten Messplatte (8c, 9c) aufweist, die in Bewegungsrichtung (7) der Relativbewegung zwischen der ersten Messplatte (8a, 9a) und der zweiten Messplatte (8b, 9b) angeordnet ist,
**dadurch gekennzeichnet, dass**
zwei Sensoranordnungen vorgesehen sind, jeweils bestehend aus dem Differential-Magnetfeldsensor und dem Sensorelement, und wobei die Messrichtungen dieser Sensoranordnungen quer und rechtwinklig zueinander ausgerichtet sind.

2. Messvorrichtung (1) nach Anspruch 1, **dadurch gekennzeichnet, dass** jede Sensoranordnung mindestens zwei quer zueinander angeordnete Messplatten (8a, 8b, 8c, 9a, 9b, 9c) hat, bei denen die Flächenschwerpunkte (10a, 10b, 10c, 11a, 11b, 11c) der von den Messplatten (8a, 8b, 8c, 9a, 9b, 9c) aufgespannten Flächen in derselben, rechtwinklig zur Bewegungsrichtung der Relativbewegung verlaufenden Ebene angeordnet sind, und dass sich diese Messplatten (8a, 8b, 8c, 9a, 9b, 9c) vorzugsweise durchdringen.

3. Messvorrichtung (1) nach Anspruch 1 oder 2, **dadurch gekennzeichnet, dass** Messsignalausgänge von mindestens zwei in Richtung der Relativbewegung zueinander versetzten Messplatten (8a, 8b, 8c, 9a, 9b, 9c) mit einer Auswerteeinrichtung verbunden sind, die einen Ausgangsanschluss aufweist an dem ein von einer zwischen den Messsignalen der Messplatten (8a, 8b, 8c, 9a, 9b, 9c) auftretenden Phasenverschiebung abhängiges, die Bewegungsrichtung (7) der Relativbewegung anzeigendes Ausgangssignal ausgebbar ist.

4. Messvorrichtung (1) nach einem der Ansprüche 1 bis 3, **dadurch gekennzeichnet, dass** ein Messsignalausgang mindestens einer Messplatte (8a, 8b, 8c, 9a, 9b, 9c) mit einer Signalwandlerstufe verbunden ist die einen Ausgang aufweist, an dem der Relativbewegung synchron zugeordnete Impulse ausgehbar sind.

5. Messvorrichtung (1) nach einem der Ansprüche 1 bis 4, **dadurch gekennzeichnet, dass** die Signalwandlerstufe mit den Messsignalausgängen mindestens zweier Messplatten (8a, 8b, 8c, 9a, 9b, 9c) verbunden ist die in quer und vorzugsweise rechtwinklig zueinander verlaufenden Ebenen angeordnet sind.

6. Messvorrichtung (1) nach einem der Ansprüche 1 bis 5, **dadurch gekennzeichnet, dass** Messsignalausgänge von mindestens zwei Messplatten (8a, 8b, 8c, 9a, 9b, 9c), die in quer und vorzugsweise rechtwinklig zueinander verlaufenden Ebenen angeordnet sind, mit einem Rechenwerk zur Berechnung des Arcustangens aus dem Quotient Messsignale dieser Messplatten verbunden sind.

7. Messvorrichtung (1) nach einem der Ansprüche 1 bis 6, **dadurch gekennzeichnet, dass** mindestens eine Messplatte (8a, 8b, 8c, 9a, 9b, 9c) zwei Kontaktpaare mit jeweils voneinander beabstandeten Anschlusskontakten zum Anlegen von Hall-Sensor-Strömen und/oder zum Abgreifen von Hall-Spannungen aufweist, dass die Messvorrichtung (1) eine Stromquelle zum Erzeugen der Hall-Sensor-Ströme und Ausgangsanschlüsse zur Ausgabe der Hall-Spannung hat, dass die Anschlusskontakte über eine Schalteinrichtung mit der Stromquelle und den Ausgangsanschlüssen verbindbar sind, und dass die Schalteinrichtung derart mit einer Ansteuereinrichtung in Steuerverbindung steht, dass folgende Schritte nacheinander durchlaufen werden können:
a) Verbinden der Stromquelle mit dem ersten Kontaktpaar und Verbinden der Ausgangsanschlüsse mit einem zweiten Kontaktpaar,
b) Verbinden der Stromquelle mit dem zweiten Kontaktpaar und Verbinden der Ausgangsanschlüsse mit dem ersten Kontaktpaar.

## Claims

1. Measuring device (1) for detecting a relative movement between at least one magnet-field sensor arrangement, which is integrated in a semiconductor chip (6), and a transmitter (2, 2') for this sensor arrangement,
wherein the transmitter (2) and the sensor arrangement are penetrated by the magnetic flux of a magnet (5) and the transmitter (2) has teeth (3) which are movable past the sensor arrangement when the relative movement takes place, or wherein the transmitter (2) has magnet poles (12) which are movable past the sensor arrangement when the relative movement takes place,
wherein the sensor arrangement comprises a differential magnetic-field sensor having a first measuring plate (8a, 9a) and a second measuring plate (8b, 9b), which are offset relative to one another in the movement direction (7) of the relative movement, and
the sensor arrangement comprises a sensor element, which is designed for measurement of the absolute magnetic field, with a third measuring plate (8c, 9c) which is arranged in the movement direction (7) of the relative movement between the first measuring plate (8a, 9a) and the second measuring plate (8b, 9b),
**characterised in that** that
two sensor arrangements each consisting of the differential magnetic-field sensor and the sensor element are provided and the measuring devices of these sensor arrangements are oriented transversely and at right angles relative to one another.

2. Measuring device (1) according to claim 1, **characterised in that** each sensor arrangement has at least two measuring plates (8a, 8b, 8c, 9a, 9b, 9c) arranged transversely to one another, in which the centres of area (10a, 10b 10c, 11 a, 11 b, 11c) of the surfaces spanned by the measuring plates (8a, 8b, 8c, 9a, 9b, 9c) are arranged in the same plane extending at right angles to the movement direction of the relative movement and that these measuring plates (8a, 8b, 8c, 9a, 9b, 9c) mutually penetrate.

3. Measuring device (1) according to claim 1 or 2, **characterised in that** measurement signal outputs of at least two measuring plates (8a, 8b, 8c, 9a, 9b, 9c), which are offset relative to one another in the direction of the relative movement, are connected with an evaluating device, which has an output terminal at which at output signal, which is dependent on a phase displacement arising between the measurement signals of the measuring plates (8a, 8b, 8c, 9a, 9b, 9c) and which indicates the movement direction (7) of the relative movement, can be issued.

4. Measuring device (1) according to any one of claims 1 to 3, **characterised in that** a measurement signal output of at least one measuring plate (8a, 8b, 8c, 9a, 9b, 8c) is connected with a signal converter stage having an output at which the relative movement of synchronously associated pulses can be issued.

5. Measuring device (1) according to any one of claims 1 to 4, **characterised in that** the signal converter stage is connected with the measurement signal outputs of at least two measuring plates (8a, 8b, 8c, 9a, 9b, 9c) which are arranged in planes extending transversely and preferably at right angles to one another.

6. Measuring device (1) according to any one of claims 1 to 5, **characterised in that** the measurement signal outputs of at least two measuring plates (8a, 8b, 8c, 9a, 9b, 9c), which are arranged in planes extending transversely and preferably at right angles to one another, are connected with a computer for computation of the arc tangent from the quotient of measurement signals of these measuring plates.

7. Measuring device (1) according to any one of claims 1 to 6, **characterised in that** at least one measuring plate (8a, 8b, 8c, 9a, 9b, 9c) has two contact pairs with respective mutually spaced-apart terminal contacts for the application of Hall sensor currents and/or for tapping of Hall voltages, that the measuring device (1) has a current source for generating the Hall sensor currents and output terminals for output of the Hall voltage, that the terminal contacts are connectible by way of a switching device with the current source and the output terminals and that the switching device is in such control connection with an activating device that the following steps can be performed in succession:
a) connecting the current source with the first contact pair and connecting the output terminals with a second contact pair,
b) connecting the current source with the second contact pair and connecting the output terminals with the first contact pair.

## Revendications

1. Dispositif de mesure (1) permettant de détecter un mouvement relatif entre au moins un agencement de capteur de champ magnétique intégré dans une puce à semi-conducteur (6) et un émetteur (2, 2') pour cet agencement de capteur, dans lequel l'émetteur (2) et l'agencement de capteur sont traversés par le flux magnétique d'un aimant (5) et l'émetteur (2) présente des dents (3), qui sont mobiles devant l'agencement de capteur lors du mouvement relatif, ou
dans lequel l'émetteur (2') présente des pôles magnétiques (12), qui sont mobiles devant l'agencement de capteur lors du mouvement relatif,
dans lequel l'agencement de capteur présente un détecteur de champ magnétique différentiel, qui comporte une première plaque de mesure (8a, 9a) et une deuxième plaque de mesure (8b, 9b), qui sont décalées l'une par rapport à l'autre dans la direction de mouvement (7) du mouvement relatif, et l'agencement de capteur présente un élément de capteur conçu pour la mesure du champ magnétique absolu avec une troisième plaque de mesure (8c, 9c), qui est disposée entre la première plaque de mesure (8a, 9a) et la deuxième plaque de mesure (8b, 9b) dans la direction de mouvement (7) du mouvement relatif,
**caractérisé en ce qu'**il est prévu deux agencements de capteur, se composant chacun du détecteur de champ magnétique différentiel et de l'élément de capteur, et dans lequel les directions de mesure de ces agencements de capteur sont orientées transversalement et perpendiculairement l'une par rapport à l'autre.

2. Dispositif de mesure (1) selon la revendication 1, **caractérisé en ce que** chaque agencement de capteur comporte au moins deux plaques de mesure (8a, 8b, 8c, 9a, 9b, 9c) disposées transversalement l'une par rapport à l'autre, dans lesquelles les centres de gravité de surface (10a, 10b 10c, 11a, 11b, 11c) des surfaces occupées par les plaques de mesure (8a, 8b, 8c, 9a, 9b, 9c) sont disposés dans le même plan, qui s'étend perpendiculairement à la direction de mouvement du mouvement relatif et **en ce que** ces plaques de mesure (8a, 8b, 8c, 9a, 9b, 9c) se traversent de préférence.

3. Dispositif de mesure (1) selon la revendication 1 ou 2, **caractérisé en ce que** des sorties de signaux de mesure d'au moins deux plaques de mesure (8a, 8b, 8c, 9a, 9b, 9c) décalées l'une par rapport à l'autre dans la direction du mouvement relatif sont reliées à un dispositif d'évaluation, qui présente un raccord de sortie auquel un signal de sortie indiquant la direction de mouvement (7) du mouvement relatif et dépendant d'un déphasage se produisant entre les signaux de mesure des plaques de mesure (8a, 8b, 8c, 9a, 9b, 9c) peut être émis.

4. Dispositif de mesure (I) selon l'une quelconque des revendications 1 à 3, **caractérisé en ce qu'**une sortie de signaux de mesure d'au moins une plaque de mesure (8a, 8b, 8c, 9a, 9b, 9c) est reliée à un étage de convertisseur de signaux qui présente une sortie, à laquelle des impulsions associées de façon synchrone au mouvement relatif peuvent être produites.

5. Dispositif de mesure (1) selon l'une quelconque des revendications 1 à 4, **caractérisé en ce que** l'étage de convertisseur de signaux est relié aux sorties de signaux de mesure d'au moins deux plaques de mesure (8a, 8b, 8c, 9a, 9b, 9c) qui sont disposées dans des plans s'étendant transversalement et, de préférence, perpendiculairement l'un à l'autre.

6. Dispositif de mesure (1) selon l'une quelconque des revendications 1 à 5, **caractérisé en ce que** des sorties de signaux de mesure d'au moins deux plaques de mesure (8a, 8b, 8c, 9a, 9b, 9c), qui sont disposées dans des plans s'étendant transversalement et, de préférence, perpendiculairement l'un à l'autre, sont reliées à un calculateur pour le calcul de l'arc tangente à partir du quotient des signaux de mesure de ces plaques de mesure.

7. Dispositif de mesure (1) selon l'une quelconque des revendications 1 à 6, **caractérisé en ce qu'**au moins une plaque de mesure (8a, 8b, 8c, 9a, 9b, 9c) présente deux paires de contacts avec des contacts de raccordement respectivement espacés l'un de l'autre pour l'application de courants de capteur de Hall et/ou pour la prise de tensions de Hall, **en ce que** le dispositif de mesure (1) comporte une source de courant pour produire les courants de capteur de Hall et des raccords de sortie pour la distribution de la tension de Hall, **en ce que** les contacts de raccordement peuvent être reliés à la source de courant et aux raccords de sortie par un dispositif de commutation, et **en ce que** le dispositif de commutation est en liaison de commande avec un dispositif de commande, de telle manière que les étapes suivantes puissent être exécutées l'une après l'autre :
a) raccordement de la source de courant à la première paire de contacts et raccordement des raccords de sortie à une deuxième paire de contacts,
b) raccordement de la source de courant à la deuxième paire de contacts et raccordement des raccords de sortie à la première paire de contacts.
